Europäisches Patentamt

European Patent Office

Office européen des brevets

(11) Publication number: **0 012 572**
**A1**

## (12) EUROPEAN PATENT APPLICATION

(21) Application number: **79302807.7**

(22) Date of filing: **06.12.79**

(51) Int. Cl.³: **C 01 B 33/28**

(30) Priority: **11.12.78 US 968063**

(43) Date of publication of application: **25.06.80**
Bulletin 80/13

(84) Designated Contracting States: **BE DE FR GB IT NL**

(71) Applicant: **MOBIL OIL CORPORATION, 150 East 42nd Street, New York New York 10017 (US)**

(72) Inventor: **Valyocsik, Ernest William, 960 Randolph Drive, Yardley Pennsylvania 19067 (US)**

(74) Representative: **Cooper, John Anthony, Mobil Court 3 Clements Inn, London WC2A 2EB (GB)**

(54) Improved method of preparing crystalline zeolite ZSM-20.

(57) An improved method of preparing substantially pure crystalline zeolite ZSM-20, a low silica, large pore zeolite from a reaction mixture containing a source of an alkali metal oxide, an oxide of a tetraethylammonium compound, an oxide of aluminum, an oxide of silicon wherein tetraalkylorthosilicates are the source of silica and water, under controlled concentration of the hydroxyl, alkali metal, and tetraethylammonium ions.

IMPROVED METHOD OF PREPARING CRYSTALLINE ZEOLITE ZSM-20

This invention relates generally to an improved method of preparing a crystalline zeolite material and particularly to an improved method of making substantially pure zeolite ZSM-20.

Zeolitic materials, both natural and synthetic, have been demonstrated in the past to have catalytic properties for various types of hydrocarbon conversions. Certain zeolitic materials are ordered, porous crystalline aluminosilicates having a definite crystalline structure within which there are a large number of channels. These cavities and channels are precisely uniform in size. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen is 1:2. The electrovalence of the tetrahedra containing aluminum is balanced by the inclusion in the crystal of a cation, for example, an alkali metal or an alkaline earth metal cation. This can be expressed wherein the ratio of aluminum to the number of various cations, such as Ca/2, Sr/2, Na, K or Li is equal to unity. One type of cation may be exchanged either entirely or partially by another type of cation utilizing ion exchange techniques in a
conventional manner.  By means of such cation exchange,
it has been possible to vary the properties of a given
aluminosilicate by suitable selection of the cation.
The spaces between the tetrahedra are occupied by
molecules of water prior to dehydration.

Prior art techniques have resulted in the
formation of a great variety of synthetic
aluminosilicates.  These aluminosilicates have come to
be designated by letter or other convenient symbols, as
illustrated by zeolite A (U.S. Patent 2,882,243),
zeolite X (U.S. Patent 2,882,244), zeolite Y (U.S.
Patent 3,130,007), zeolite ZK-5 (U.S. Patent 3,247,195),
zeolite ZK-4 (U.S. Patent 3,314,752) zeolite ZSM-5 (U.S.
Patent 3,702,886), zeolite ZSM-11 (U.S. Patent
3,709,979), zeolite ZSM-12 (U.S. Patent 3,832,449) and
zeolite ZSM-20 (U.S. Patent 3,972,983), merely to name a
few.

A crystalline aluminosilicate zeolite well
known in the art is faujasite.  The ZSM-20 zeolite made
by the present invention resembles faujasite in certain
aspects of structure, but has a notably higher
silica/alumina ratio than faujasite.

The present invention relates to an improved
method of preparing synthetic crystalline
aluminosilicate, designated as "zeolite ZSM-20" or
simply "ZSM-20".  The ZSM-20 composition has a
characteristic X-ray diffraction pattern, the values of
which are set forth in Table 1, of U.S. Patent
3,972,983.

In the as synthesized form, the zeolite has a
formula, in terms of mole ratios of oxides and in the

- 3 -

0012572

anhydrous state, as follows:

$$(0.3-0.6)R_2O : (0.4-0.7)M_2O : Al_2O_3 : (7-10)SiO_2$$

wherein R is a tetraethylammonium cation and M is an alkali metal cation, especially sodium.

Also, the zeolite ZSM-20 crystal structure is comprised of relatively uniform rigid three-dimensional pore networks characterized by uniform pores of between 7 and 8 Angstrom units in diameter.

While synthetic ZSM-20 zeolites or the thermally treated products thereof may be used in a wide variety of hydrocarbon conversion reactions, they are notably useful in the processes of polymerization, aromatization, cracking and hydrocracking. Other hydrocarbon conversion processes for which ZSM-20 or the thermally treated product thereof may be utilized in one or more of its active forms include, for example, alkylation and converting light aliphatics to aromatics such as in U.S. Patent 3,760,024.

Zeolite ZSM-20 in accord with the invention is prepared from a solution containing sources of an alkali metal oxide, preferably sodium oxide, an oxide of tetraethylammonium, an oxide of aluminum, an oxide of silicon, wherein tetraalkylorthosilicates, e.g. ethyl, propyl etc., are the source of silica and water under controlled concentration of the hydroxyl, alkali metal, and tetraethylammonium ions, and having a composition, in terms of mole ratios of oxides, falling within the following ranges:

| | BROAD | PREFERRED |
|---|---|---|
| $\frac{M^+ + R^+}{M^+}$ | 2-14 | 6-10 |
| $H_2O/SiO_2$ | 7-20 | 8-10 |

$H_2O/OH^-$      5-40     7-11

$SiO_2/Al_2O_3$    10-31    29-31

wherein R is a tetraethylammonium cation and M is an alkali metal cation, and maintaining the mixture until crystals of the zeolite are formed. Thereafter, the crystals are separated from the liquid and recovered. Typical reaction conditions consist of heating the foregoing reaction mixture to a temperature of from about 90°C for a period of time of from about 2 weeks to about 6 weeks. A more preferred temperature range is from about 100°C to about 120°C with the amount of time at a temperature in such range being from about 1 week to about 1 month.

The digestion of the gel particles is carried out until crystals form. The solid product is separated from the reaction medium, as by cooling the whole to room temperature, filtering and water washing.

The crystalline product is dried, e.g. at 230°F, for from about 8 to 24 hours. Of course, milder conditions may be employed if desired, e.g. room temperature under vacuum.

The composition for the synthesis of synthetic ZSM-20 can be prepared utilizing materials which can supply the appropriate oxide. Such compositions include aluminates, alumina, silicates, as specified above, and hydroxides.

Crystal size and crystallization time of the ZSM-20 composition will vary with the nature of the reaction mixture employed.

ZSM-20, another TEA zeolite, crystallizes in competition with zeolite Beta and dense phases such as zeolite P. Water, sodium, and hydroxide levels control that competition. Tetraethylorthosilicate ($Et_4SiO_4$) is a superior silica source for the rapid and efficient synthesis of ZSM-20 compared with the use of other soluble forms of silica such as Q-brand sodium silicate, silica sol, or the previously employed tetramethylorthosilicate ($Me_4SiO_4$).

U.S. Patents 3,972,983 and 4,021,331 describe the preparations of ZSM-20 with $Me_4SiO_4$ over a relatively narrow $SiO_2/Al_2O_3$ range at 100°C, static, in 19-42 days. It has now been found that ZSM-20 can be more reproducibly crystallized in shorter times at optimum $OH^-$ levels and similar $SiO_2/Al_2O_3$ range and temperature, if $Et_4SiO_4$ is used as the silica source. Further, the ethanol by-product is also less toxic than methanol from $Me_4SiO_4$. Higher tetraalkylorthosilicates (i.e. propyl, butyl, etc) would be expected to be as effective, if not superior, silica sources. Not only must the $Na^+$ content of the reaction mixture be minimized, as with zeolite Beta synthesis, but also in ZSM-20 synthesis the water level must be minimized for the rapid and efficient crystallization of ZSM-20. It has also been found that a low-temperature aging period is not required prior to crystallization, but time is an important variable, for, as the reaction mixture becomes more siliceous during crystallization, Beta phase begins to form.

In order to more fully illustrate the nature of the invention and the manner of practicing same, the following examples are presented. These examples are not to be considered limiting, as would be realized by one of ordinary skill in the art.

EXAMPLES 1-11 and 12-18

      The following examples whose reaction mixtures and results are tabulated in Tables I (Example 1-11) and Table II (Examples 12-21) below demonstrate the critical importance of the variables stated above. The products were prepared in the general manner as described in Example 19.

TABLE I

ZSM-20 Crystallizations

$100^{\circ}C$; static; $NaAlO_2$

$SiO_2/Al_2O_3=30$[a]

| | | Mixture Composition[a] | | | | | | |
|---|---|---|---|---|---|---|---|---|
| | Silica | $H_2O$ | OH | Na | TEA | $H_2O$ | $M^+ + R^+$ | |
| Example | Source | $\overline{SiO_2}$ | $\overline{SiO_2}$ | $\overline{SiO_2}$ | $\overline{SiO_2}$ | $\overline{OH^-}$ | $\overline{M5^+}$ | Days |
| 1 | $Et_4SiO_4$ | 15 | 1.20 | 0.09 | 1.18 | 12.5 | 14.1 | 33 |
| 2 | $Et_4SiO_4$ | 30 | 0.90 | 0.09 | 0.88 | 33.3 | 10.8 | 27 |
| 3 | Sol | 35 | 0.90 | 0.09 | 0.88 | 33.3 | 10.8 | 13 |
| 4 | Q[b] | 15 | 0.90 | 0.68 | 0.87 | 16.6 | 2.3 | 34 |
| 5 | Sol | 15 | 0.90 | 0.09 | 0.85 | 16.6 | 10.4 | 34 |
| 6 | $Et_4SiO_4$ | 15 | 0.90 | 0.09 | 0.85 | 16.6 | 10.4 | 25 |
| 7 | $Et_4SiO_4$ | 10 | 0.90 | 0.09 | 0.88 | 11.1 | 10.7 | 11 |
| 8 | $Et_4SiO_4$ | 8 | 0.90 | 0.09 | 0.88 | 8.9 | 10.7 | 19 |
| 9 | $Et_4SiO_4$ | 9 | 0.90 | 0.09 | 0.88 | 10.0 | 10.7 | 8 |
| 10 | $Et_4SiO_4$ | 15 | 0.70 | 0.09 | 0.68 | 21.4 | 8.55 | 65 |
| 11 | $Et_4SiO_4$ | 15 | 0.50 | 0.09 | 0.48 | 30.0 | 6.33 | 77 |

a - mole ratios

b - $Al_2(SO_4)_3 \cdot 16H_2O$ as alumina source

- 8 -

TABLE I (CONTINUED)

ZSM-20 Crystallizations

$100^{\circ}C$; static; $NaAlO_2$

$SiO_2/Al_2O_3=30$[a]

| Example | Product |
|---------|---------|
| 1 | 90% Y-Faujasite+dense phase |
| 2 | Amorphous |
| 3 | 90% Y-faujasite |
| 4 | Na-P |
| 5 | 10% ZSM-20+unident. component |
| 6 | 100% ZSM-20 |
| 7 | 100% ZSM-20 |
| 8 | 100% ZSM-20 |
| 9 | 100% ZSM-20 |
| 10 | 15% ZSM-20+40% Beta+unident. comp. |
| 11 | 15% ZSM-20+25% Beta+5% Zeolite A+ unident. component |

TABLE II

ZSM-20 Crystallizations

$100^{\circ}C$; static; $SiO_2/Al_2O_3 = 10$[a];

$H_2O/SiO_2 = 15$; $NaAlO_2$

| | | Mixture Composition[a] | | | | | |
|---|---|---|---|---|---|---|---|
| | Silica | OH | Na | TEA | $H_2O$ | $R^+ + M^+$ | |
| Example | Source | $SiO_2$ | $SiO_2$ | $SiO_2$ | $OH^-$ | $M^+$ | Days |
| 12 | Q[b] | 0.90 | 0.86 | 0.83 | 16.6 | 1.9 | 28 |
| 13 | Q[b] | 0.90 | 0.86 | 0.24 | 16.6 | 1.3 | 28 |
| 14 | $Et_4SiO_4$ | 0.90 | 0.27 | 0.83 | 16.6 | 4.1 | 28 |
| 15 | Q[b] | 0.70 | 0.86 | 0.63 | 21.4 | 1.7 | 28 |
| 16 | Q[b] | 0.70 | 0.86 | 0.10 | 21.4 | 1.1 | 28 |
| 17 | $Et_4SiO_4$ | 0.70 | 0.27 | 1.00 | 21.4 | 4.7 | 28 |
| 18 | $Et_4SiO_4$ | 0.70 | 0.27 | 0.63 | 21.4 | 3.3 | 28 |

a - mole ratios

b - $Al_2(SO_4)_3 \cdot 16H_2O$ as alumina source

TABLE II (CONTINUED)

ZSM-20 Crystallizations

$100^{\circ}C$; static; $SiO_2/Al_2O_3=10^a$;

$H_2O/SiO_2=15$; $NaAlO_2$

| Example | Product |
|---------|---------|
| 12 | Unidentified component + NaP |
| 13 | NaP + dense phase |
| 14 | 10% ZSM-20+unident. component+NaP |
| 15 | NaP + dense phase |
| 16 | NaP |
| 17 | 5% ZSM-20+unident. component+NaP |
| 18 | 50% ZSM-20+unident. component |

Looking at the results of Table I it can be seen from Examples 6, 7, 8 and 9 that by rigid control of the OH, Na and TEA factors that 100% ZSM-20 was obtained. With respect to the results of Table II, it would appear that ZSM-20 can be synthesized at $SiO_2/Al_2O_3=10$, however, the crystallization rates were much less than at $SiO_2/Al_2O_3=30$ (Table I).

## EXAMPLE 19

Illustrating the preparation of ZSM-20, a solution comprising 759.4 grams $H_2O$ and 67.5 grams $NaAlO_2$ (40% $Al_2O_3$; 33% $Na_2O$) was prepared. The solution was stirred until all the $NaAlO_2$ was dissolved. Added to this stirred solution was 1770 ml. of freshly prepared 3.95 $\underline{N}$ tetraethylammonium hydroxide solution (density 1.03). A 1665.2 gram quantity of tetraethyorthosilicate was added to the above solution and mixed thoroughly. The slurry so formed was placed in a 100°C steam chest. Crystallization at 100°C over 12 days produced 162 grams of ZSM-20 crystals.

WHAT IS CLAIMED IS:

1.          A method for preparing zeolite ZSM-20 which comprises forming a reaction mixture containing sources of an alkali metal oxide, alumina, silica, a tetraalkylammonium oxide and water characterized in that the source of the silica is a $C_2$-$C_4$ tetraalkylorthosilicate and that the reaction mixture has the composition (in terms of mole ratios):

$$\frac{M^+ + R^+}{M^+} \qquad 2 \text{ to } 14$$

| | |
|---|---|
| $H_2O/SiO_2$ | 7 to 20 |
| $H_2O/CH^-$ | 5 to 40 |
| $SiO_2/Al_2O_3$ | 10 to 31 |

wherein R is tetraalkylammonium and M is alkali metal, said mixture being maintained at least 90°C until crystals of the zeolite are formed.

2.          The method of Claim 1 wherein the mixture has a composition, in terms of mole ratios of oxides, falling within the following ranges:

| | |
|---|---|
| $\dfrac{M^+ + R^+}{M^+}$ | 6 to 10 |
| $H_2O/SiO_2$ | 8 to 10 |
| $H_2O/OH^-$ | 7 to 11 |
| $SiO_2/Al_2O_3$ | 29 to 31 |

3.          The method according to Claim 1 wherein the temperature is maintained between from about 90°C to about 150°C.

4.          The method according to Claim 2 wherein the temperature is maintained between from about 90°C to about 120°C.

5.      A method according to any of Claims 1 to 4 wherein said tetraalkylorthosilicate is selected from tetraethylorthosilicate, tetrapropylsilicate, and tetrabutylsilicate.

6.      A method according to any of Claims 1 to 4 wherein said tetraalkylorthosilicate is tetraethylorthosilicate and the mole ratios of $H_2O/OH^-$ and $\dfrac{R^+ + M^+}{M^+}$ are about 11 and 10.7 respectively.

**European Patent Office**

# EUROPEAN SEARCH REPORT

0012572
Application number

EP 79 302 807.7

| DOCUMENTS CONSIDERED TO·BE RELEVANT | | | CLASSIFICATION OF THE APPLICATION (Int. Cl.³) |
|---|---|---|---|
| Category | Citation of document with indication, where appropriate, of relevant passages | Relevant to claim | |
| D,X | <u>US - A - 4 021 331</u> (CIRIC) <br> * examples 1, 2, 5, 6 * <br><br> -- | 1-6 | C 01 B 33/28 |
| D,X | <u>US - A - 3 972 983</u> (CIRIC) <br> * examples 1 to 3, 5, 6 * <br><br> -- | 1-6 | |
| A | Chemical Abstracts vol. 84, <br> 23 February 1976 <br> Columbus, Ohio, USA <br> R. HINO et al. "Optimum conditions for the synthesis of zeolite X by direct hydrolysis of ethyl ortho-silicate" <br> page 661, column 2, abstract no. 53255c | | **TECHNICAL FIELDS SEARCHED (Int.Cl.³)** <br><br> C 01 B 33/28 |
| & | Shimane Daigaku Bunrigakubu Kiyo, Rigakka Hen, vol. 8, 1975, pages 61 to 74 (Japan) <br><br> -- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

./..

| | The present search report has been drawn up for all claims | | |
|---|---|---|---|
| Place of search <br> Berlin | Date of completion of the search <br> 29-02-1980 | Examiner <br> KESTEN | |

EPO Form 1503.1   06.78

European Patent Office

**EUROPEAN SEARCH REPORT**

0012572
Application number

EP 79 302 807.7

- page 2 -

## DOCUMENTS CONSIDERED TO BE RELEVANT

| Category | Citation of document with indication, where appropriate, of relevant passages | Relevant to claim |
|---|---|---|
| A | Chemical Abstracts vol. 84, 5 April 1976 Columbus, Ohio, USA R. HINO et al. "Optimum conditions of the synthesis of zeolite A by the direct hydrolysis of ethyl ortho-silicate" page 138, column 2, abstract no. 76426y & Nippon Kagaku Kaishi, no. 11, 1975, pages 1847 to 1851 (Japan) -- | |
| A | Chemical Abstracts vol. 85, 27 December 1976 Columbus, Ohio, USA R. HINO et al. "Behavior of silicon, aluminium, and sodium oxides during the crystallization of zeolite X" page 123, column 2, abstract no. 194798q & Shimane Daigaku Bunrigakubu Kiyo, Rigakka Hen, vol. 9, 1975, pages 71 to 78 (Japan) ---- | |

**CLASSIFICATION OF THE APPLICATION (Int. Cl.3)**

**TECHNICAL FIELDS SEARCHED (Int. Cl.3)**